# EUROPEAN PATENT APPLICATION

(11) **EP 1 821 138 A1**
(43) Date of publication of application: **22.08.2007**
(21) Application number: 07003467.3
(22) Date of filing: 20.02.2007
(51) Int. Cl.: G02F 1/1343, G09G 3/36

(54) **Liquid crystal display**

(30) Priority: 21.02.2006 KR 20060016877; 27.07.2006 KR 20060070939
(71) Applicant: Samsung Electronics Co., Ltd., Yeongtong-gu Suwon-city, Gyeonggi-do 442-742 (KR)
(72) Inventor: Lee, Jun-woo, Dongan-gu Anyang-si, Gyeonggi-do (KR); Kim, Hee-seop, Taean-eub Hwaseong-si, Gyeonggi-do (KR); Lee, Chang-hun, Giheung-gu, Yongin-si Gyeonggi-do (KR); Lu, JianGang, Yeongtong-gu Suwong-si, Gyeonggi-do (KR)
(74) Representative: Schmidt, Sven Hendrik

(57) **Abstract**

An LCD with better visibility and transmittance is disclosed, the LCD having a first panel including a first field-generating electrode disposed in a pixel area of an insulation substrate, a plurality of sub-electrodes which are separated from each other by a predetermined distance and arranged parallel to each other and a connecting electrode electrically connecting the sub-electrodes, and a first alignment film covering the first field-generating electrode and being rubbed in a first direction; a second panel including a second field-generating electrode disposed on an insulation substrate, a plurality of openings facing the sub-electrodes and having widths greater than the widths of the sub-electrodes, and a second alignment film covering the second field-generating electrode and being rubbed in a second direction; and a liquid crystal layer interposed between the first panel and the second panel.

## Description

### BACKGROUND OF THE INVENTION

### 1. Field of the Invention

The present disclosure relates to liquid crystal display ("LCD") technology, and, more particularly, to LCDs with improved visibility and transmittance.

### 2. Description of the Related Art

LCDs, which are widely used in flat panel displays, include two plates or panels having a plurality of electrodes and a liquid crystal layer interposed therebetween. LCDs adjust the amount of light transmitted therethrough by applying a voltage to the electrodes to rearrange liquid crystals in the liquid crystal layer. In the LCD, thin film transistors are used as switching elements for controlling picture signals applied to the respective electrodes.

Among LCDs, a vertical alignment (VA) mode LCD, which aligns liquid crystals such that the long axes of the LC molecules are perpendicular to the plates in the absence of an electric field, is popular because of its wide viewing angle and large contrast ratio. In VA mode LCDs, a wide viewing angle can be realized by forming cutouts or protrusions in each field-generating electrode. Here, the tilt directions of liquid crystals are uniformly distributed in four directions by a fringe field in order to realize a wide viewing angle. In particular, a patterned vertically aligned (PVA) mode LCD having formed cutouts in its electrodes is recognized as a wide viewing angle LCD technology capable of substituting for a horizontal electric field mode such as an in-plane switching (IPS) mode or a fringe field switching (FFS) mode.

However, a PVA-mode LCD has a lateral gamma curve distortion that does not agree with its front gamma curve, and thus exhibits lower left and right visibility compared with twisted nematic (TN)-mode LCDs. For example, a PVA-mode LCD having cutouts as domain-defining members shows images that become bright and white toward the lateral side, and in a serious case, brightness differences between bright gray-scales appear very unclear, and hence, images appear to lose contrast.

### SUMMARY OF THE INVENTION

A feature of the present disclosure is to provide an LCD with improved visibility and transmittance.

According to an aspect of the present disclosure, there is provided an LCD including a first panel having a first field-generating electrode and a first alignment film, a second panel having a second field-generating electrode and a second alignment film, and a liquid crystal layer interposed between the first panel and the second panel.

According to another aspect of the present disclosure, there is provided an LCD including a first panel which has a first field-generating electrode disposed in a pixel area of a first insulation substrate and a first horizontal-alignment film covering the first field-generating electrode and being rubbed in a first direction, the first field-generating electrode having a plurality of sub-electrodes being parallel to and separated from each other by a predetermined distance and a connecting electrode electrically connecting the sub-electrodes; a second panel which has a second field-generating electrode disposed on a second insulation substrate and a second horizontal-alignment film covering the second field-generating electrode and being rubbed in a second direction, the second field-generating electrode having a plurality of openings facing the sub-electrodes and widths greater than widths of the sub-electrodes; and a liquid crystal layer, including liquid crystals having negative dielectric anisotropy, interposed between the first panel and the second panel.

According to still another aspect of the present disclosure, there is provided a LCD including a first panel which has a first field-generating electrode disposed in a pixel area of a first insulation substrate and a first horizontal-alignment film covering the first field-generating electrode and being rubbed in a first direction, the first field-generating electrode having a plurality of sub-electrodes being parallel to and separated from each other by a predetermined distance and a connecting electrode electrically connecting the sub-electrodes; a second panel which has a second field-generating electrode disposed on a second insulation substrate and a second horizontal-alignment film covering the second field-generating electrode and being rubbed in a direction opposite to the first direction, the second field-generating electrode having a plurality of openings facing the sub-electrodes and widths greater than widths of the sub-electrodes; and a liquid crystal layer, including liquid crystals having positive dielectric anisotropy, interposed between the first panel and the second panel.

### BRIEF DESCRIPTION OF THE DRAWINGS

The above and other features and aspects of the present disclosure will become more apparent by describing in detail preferred embodiments thereof with reference to the attached drawings, in which:
Figure 1 illustrates a layout of a LCD according to a first embodiment of the present disclosure;
Figure 2 illustrates a layout of a first panel of the LCD according to the first embodiment of the present disclosure;
Figure 3 illustrates a layout of a second panel of the LCD according to the first embodiment of the present disclosure;
Figure 4 is a sectional view taken along a line IV-IV' of Figure 1;
Figure 5 is a schematic plan view illustrating the arrangement of liquid crystals when a thin film transistor of the LCD according to the first embodiment of the present disclosure is in an "OFF" state;
Figure 6a is a voltage diagram illustrating a data voltage and a common voltage applied to a LCD according to an embodiment of the present disclosure;
Figure 6b is a schematic plan view illustrating the arrangement of liquid crystals when a thin film transistor of the LCD according to the first embodiment of the present disclosure is in an "ON" state;
Figure 7 is a schematic sectional view illustrating the arrangement of liquid crystals in the "ON" state of a thin film transistor of the LCD according to the first embodiment of the present disclosure;
Figure 8 illustrates a layout of a LCD according to a second embodiment of the present disclosure;
Figure 9 illustrates a layout of a first panel of the LCD according to the second embodiment of the present disclosure;
Figure 10 illustrates a layout of a second panel of the LCD according to the second embodiment of the present disclosure;
Figure 11 is a sectional view taken along a line XI-XI' of Figure 8;
Figure 12 is a schematic plan view illustrating the arrangement of liquid crystals when a thin film transistor of the LCD according to the second embodiment of the present disclosure is in an "OFF" state;
Figure 13 is a schematic plan view illustrating the arrangement of liquid crystal molecules when a thin film transistor of the LCD according to the second embodiment of the present disclosure is in an "ON" state;
Figure 14 illustrates a layout of a LCD according to third embodiment of the present disclosure;
Figure 15 illustrates a layout of a first panel of the LCD according to the third embodiment of the present disclosure;
Figure 16 illustrates a layout of a second panel of the LCD according to the third embodiment of the present disclosure;
Figure 17 is a sectional view taken along a line XVII-XVII' of Figure 14;
Figure 18 is a schematic plan view illustrating the arrangement of liquid crystals when a thin film transistor of the LCD according to the third embodiment of the present disclosure is in an "OFF" state;
Figure 19 is a schematic plan view illustrating the arrangement of liquid crystals when a thin film transistor of the LCD according to the third embodiment of the present disclosure is in an "ON" state;
Figure 20 illustrates a layout of a LCD according to a fourth embodiment of the present disclosure;
Figure 21 illustrates a layout of a first panel of the LCD according to the fourth embodiment of the present disclosure;
Figure 22 illustrates a layout of a second panel of the LCD according to the fourth embodiment of the present disclosure;
Figure 23 is a sectional view taken along a line XXIII-XXIII' of Figure 20;
Figure 24 is a schematic plan view illustrating the arrangement of liquid crystals when a thin film transistor of the LCD according to the fourth embodiment of the present disclosure is in an "OFF" state;
Figure 25 is a schematic plan view illustrating the arrangement of liquid crystals when a thin film transistor of the LCD according to the fourth embodiment of the present disclosure is in an "ON" state; and
Figures 26 through 28 are sectional views diagrammatically illustrating the equipotential lines formed in the "ON" state of thin film transistors of the LCDs of Experimental Examples 9 and 22, and Comparative Example 9.

### DETAILED DESCRIPTION OF PREFERRED EMBODIMENTS

Features and aspects of the present disclosure and methods of accomplishing the same may be understood more readily by reference to the following detailed description of preferred embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the pertinent art, and the present invention will only be defined by the appended claims. Like reference numerals may refer to like elements throughout the specification. In addition, the present disclosure will be described in detail through the following concrete experimental examples. However, the experimental examples are for illustrative purposes, and other examples and applications may be readily envisioned by those of ordinary skill in the pertinent art. Since a person skilled in the art can sufficiently analogize the technical contents that are not described in the following concrete experimental examples, the description thereabout is omitted.

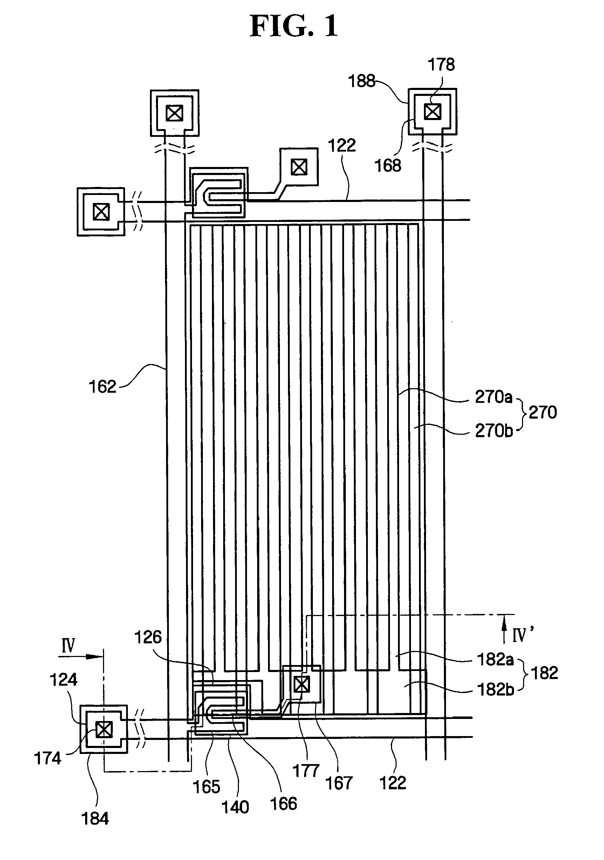

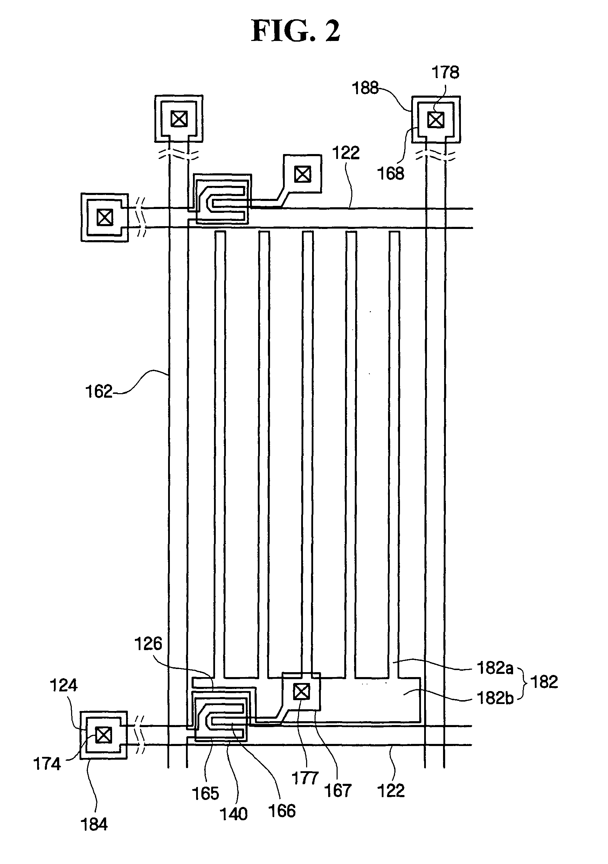

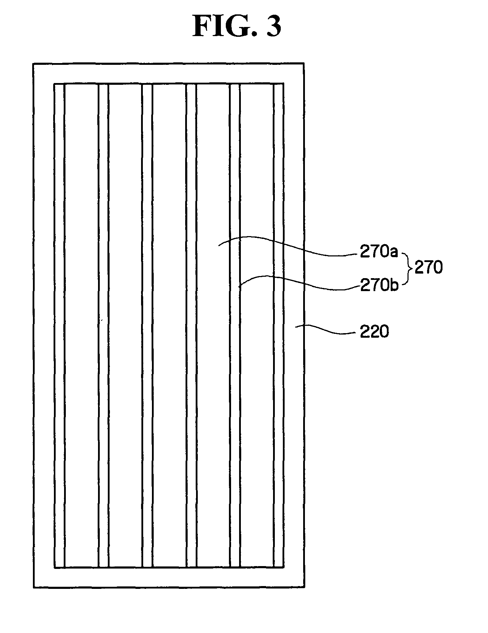

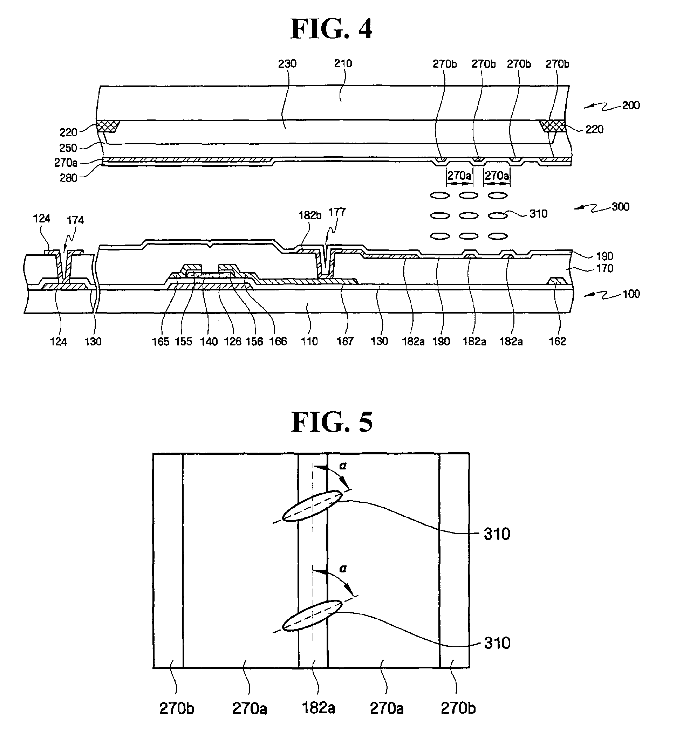

First, an LCD according to a first embodiment of the present disclosure will be described with reference to Figures 1 through 4. Figure 1 illustrates a layout of a LCD according to a first embodiment of the present disclosure, Figure 2 illustrates a layout of a first panel of the LCD according to the first embodiment of the present disclosure, Figure 3 illustrates a layout of a second panel of the LCD according to the first embodiment of the present disclosure, and Figure 4 is a sectional view taken along a line IV-IV' of Figure 1. The LCD includes a first panel, a second panel facing the first panel, and a liquid crystal layer 300 interposed between the first and second panels, including liquid crystals 310 aligned horizontally with respect to the first and second panels.

Referring to Figures 2 and 4, with respect to the first panel 100, a pixel electrode 182 made of transparent conductive oxide such as an indium tin oxide (ITO) or indium zinc oxide (IZO) is disposed on a first insulation substrate 110 made of a transparent insulation material such as glass. The pixel electrode 182 is a field-generating electrode and includes a plurality of sub-electrodes 182a parallel to and separated from each other by a predetermined distance and a connecting electrode 182b electrically connecting the sub-electrodes 182a.

The pixel electrode 182 is connected to a thin film transistor to receive a data voltage. The thin film transistor is connected to a gate line 122 responsible for gate signal transmission and a data line 162 responsible for image signal transmission, and turns the pixel electrode 182 on/off according to a gate signal. An alignment film 190 is disposed on the first insulation substrate 110 having thereon the pixel electrode 182. The alignment film 190 allows the liquid crystals 310 of the liquid crystal layer 300 to be horizontally aligned in a voltage-off state.
In addition, the second panel 200 includes a black matrix 220 for preventing light leakage, a color filter 230 composed of red, green, and blue components, and a common electrode 270, which is a field-generating electrode, made of transparent conductive oxide such as ITO or IZO. The common electrode 270 includes a plurality of openings 270a, and further includes field-generating portions 270b that are formed on a lower surface of an insulation substrate 210, which is made of a transparent insulation material such as glass.

An alignment film 280 is disposed on the second insulation substrate 210 having thereon the common electrode 270. The alignment film 280 allows the liquid crystals 310 of the liquid crystal layer to be horizontally aligned.
The LCD according to the first embodiment of the present disclosure will be described in more detail. The first panel 100 will be described first. Gate wires formed on the first insulation substrate 110 include the gate line 122 extending in a transverse direction, a gate pad 124 connected to an end of the gate line 122 to receive a gate signal from an external device and transmit the received gate signal to the gate line 122, and a gate electrode 126 of a thin film transistor which is connected to the gate line 122 and formed in a protrusion shape. Here, the gate wires may have a single layered structure including a conductive layer made of an Al containing metal such as Al or an Al alloy, or a multi-layered structure including another layer made of, particularly, a material that shows physically, chemically and electrically good contact characteristics with respect to ITO or IZO, such as Cr, Ti, Ta, Mo or an alloy thereof, formed on the conductive layer.

A gate insulation film 130 made of silicon nitride (SiNx) and others is disposed on a first insulation substrate 110 and gate wires. Data wires are disposed on the gate insulation film 130, and extend along a longitudinal direction to intersect the gate wires, defining, for example, a rectangular pixel area shaped. The data wires include a data line 162, a source electrode 165, which is a branch of the data line 162, a drain electrode 166 separated from the source electrode 165 and a data pad 168 formed at an end of the data line 162. Like the gate wires, the data line 162, the source electrode 165, the drain electrode 166, and the data pad 168 may have a single layered structure including a conductive layer made of Al or an Al alloy, or a multi-layered structure including another layer made of, particularly, a material that shows good physical, chemical and electrical contact characteristics with respect to ITO or IZO, such as Cr, Ti, Ta, Mo or an alloy thereof, formed on the conductive layer.

A semiconductor layer 140 defining a channel region of a thin film transistor is formed below the source electrode 165 and the drain electrode 166. In addition, ohmic contact layers 155 and 156 are formed of, for example, silicide or n+ hydrogenated silicon doped with a high concentration of n-type impurities, on the semiconductor layer 140 to reduce contact resistance between the source/drain electrodes 165 and 166 and the semiconductor layer 140.

A passivation layer made of an inorganic insulation material such as silicon nitride or an organic insulation material such as resin is formed on the data wires. Contact holes 177 and 178 exposing the drain electrode 166 and the data pad 168, respectively, are formed on the passivation layer. In addition, a contact hole 174 is formed on the passivation layer through the gate insulation layer 130 to expose the gate pad 124.

A pixel electrode 182 electrically connected to the drain electrode 166 via the contact hole 177 is disposed on the passivation layer. The pixel electrode 182 includes the plurality of the sub-electrodes 182a and the connecting electrode 182b connecting the sub-electrodes 182b.

The sub-electrodes 182a of the pixel electrode 182 may be formed in the shape of predetermined stripes, parallel with longer sides of the pixel area substantially extending in the direction of a data line 162, for example. In this case, a width of each of the sub-electrodes 182a and a distance between the sub-electrodes 182b depend on optical properties of an LCD. For example, a width of each of the sub-electrodes 182a may be approximately 6 µm or less, and a distance between the sub-electrodes 182a may range from approximately 4 to approximately 14 µm. If the width of each of the sub-electrodes 182a is 4 µm, the distance between the sub-electrodes 182a may be approximately 11 µm.

The connecting electrode 182b of the pixel electrode 182 is formed to electrically connect the respective sub-electrodes 182a to each other. As illustrated in Figures 1 and 2, the connecting electrode 182b may be formed by connecting the respective sub-electrodes 182a to each other at either side or both sides of the sub-electrodes 182a or at the central portion of sub-electrodes 182a, and a connecting portion of the respective sub-electrodes 182a is not particularly limited. The pixel electrode 182 applied with a pixel voltage generates an electric field together with the common electrode 270 of the second panel 200, thereby determining the directions of the liquid crystals 310 of the liquid crystal layer between the pixel electrode 182 and the common electrode 270.

An auxiliary gate pad 184 and an auxiliary data pad 188 connected to a gate pad 124 and a data pad 168 via the contact holes 174 and 178, respectively, are also disposed on the passivation layer. The auxiliary gate pad 184 and the auxiliary data pad 188 complement adhesions to external circuit devices and protect the gate pad 124 and the data pad 168. The auxiliary gate pad 184 and the auxiliary data pad 188 may be made of ITO or IZO.

The alignment film 190 is disposed on the first insulation substrate 110 having the pixel electrode 182. The alignment film 190 may be a horizontal-alignment film that allows the liquid crystals 310 of the liquid crystal layer to be aligned horizontally with respect to the substrate 110 in a voltage-off state. The alignment film 190 allows the liquid crystals 310 to have a pre-tilt angle of, for example, 0.5 to 3 degrees, so that the liquid crystals 310 move in a particular direction in each domain in a voltage-on state. The alignment film 190 may be rubbed so that the liquid crystals 310 of the liquid crystal layer are aligned at an angle of α with respect to the sub-electrodes 182a in a voltage-off state. Here, the angle α may be determined by set optical properties of the LCD, and may be an arbitrary angle exempting 0 and 90 degrees. For example, the angle α may be in the range between 60 and 85 degrees.

The second panel 200 is described in more detail. Referring to Figures 3 and 4, the black matrix 220 is disposed on the substrate 210 of the second panel to prevent light leakage. The color filter 230 composed of red, green, and blue components is disposed on the black matrix 220, and an overcoat layer 250 is disposed on the color filter 230 to planarize the stepped surface of the color filter 230.

The common electrode 270 is disposed on the overcoat layer 250. The common electrode 270 includes the plurality of openings 270a and the plurality of field-generating portions 270b. The openings 270a of the common electrode 270 are formed parallel to sub-electrodes 182a of the pixel electrode 182 with the liquid crystal layer interposed therebetween. The widths of the openings 270a of the common electrode 270 are equal to or greater than those of the sub-electrodes 182a so that the sub-electrodes 182a are not substantially overlapped with the common electrode portions 270.

Here, the widths of the openings 270a are determined by set optical properties of the LCD and the widths of the sub-electrodes 182a. For example, each opening 270a may have a width of approximately 4 to 14 µm. In such a case, if the width of each sub-electrode 182a is 4 µm, the width of each opening 270a may be 11 µm. The common electrode 270 is made of, for example, a transparent conductive material such as ITO or IZO.

Electric fields are generated by the field-generating electrode portions 270b interposed between the openings 270a of the field-generating electrode 270b, together with the sub-electrodes 182a of the first panel 100. The widths of the field-generating electrode portions 270b interposed between the openings 270a, i.e., the distances between the openings 270a, are determined by the set optical properties of the LCD and the widths of the sub-electrodes 182a and the openings 270a. For example, the widths of the field-generating electrode portions 270b interposed between the openings 270a may be approximately 6 µm or less.

The alignment film 280 is disposed on the second insulation substrate 210 having thereon the common electrode 270. Except that the rubbing direction of the alignment film 280 and the rubbing direction of the alignment film 190 of the first panel 100 form an angle of 180 degrees, the alignment film 280 is identical to the alignment film 190 of the first panel 100. Hence, the similar description has been omitted.

The liquid crystal layer including the liquid crystals 310 is interposed between the above-described thin film-containing first panel 100 and color filter-containing second panel 200. The liquid crystals 310 are horizontally aligned between the first panel 100 and the second panel 200, and have negative dielectric anisotropy (Δε<0), i.e., the long axes of the liquid crystals 310 are aligned vertically with respect to an applied electric field. The liquid crystals 310 may be commercially used, and are driven according to the on/off state of pixels in such a way that their long axes are aligned substantially parallel to the surfaces of the substrates 110 and 210.

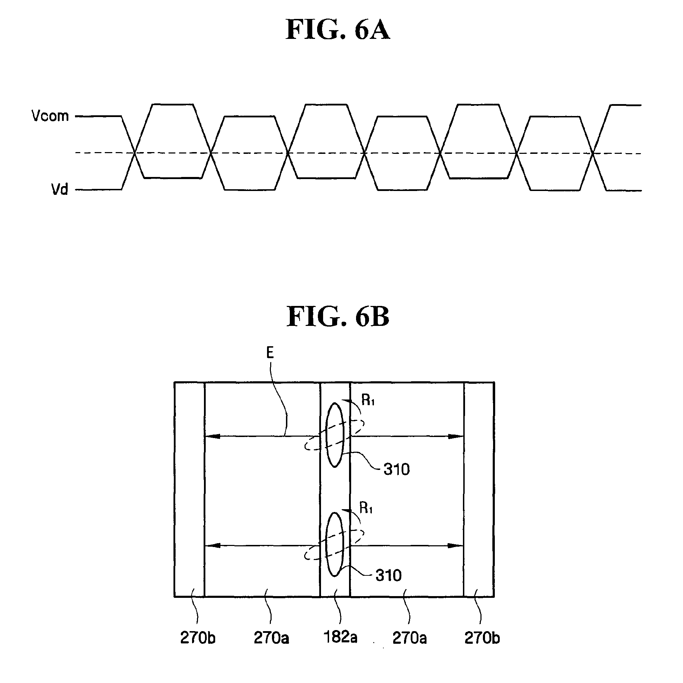

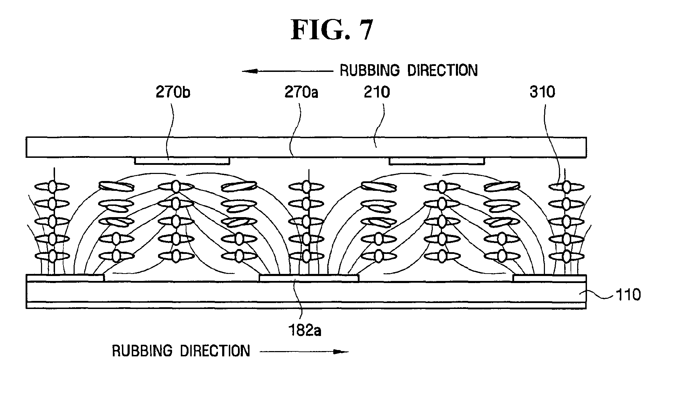

Next, the arrangement of the liquid crystal molecules 310 in the on/off state of a thin film transistor of the LCD according to the illustrative embodiment will now be described with reference to Figures 4 through 7. Figure 5 is a schematic plan view illustrating the arrangement of liquid crystals when a thin film transistor of the LCD according to the first embodiment of the present disclosure is in an "OFF" state, Figure 6a is a voltage diagram illustrating a data voltage and a common voltage applied to a LCD according to an embodiment of the present disclosure, Figure 6B is a schematic plan view illustrating the arrangement of liquid crystals when a thin film transistor of the LCD according to the first embodiment of the present disclosure is in an "ON" state, and Figure 7 is a schematic sectional view illustrating the arrangement of liquid crystals in the "ON" state of a thin film transistor of the LCD according to the first embodiment of the present disclosure.

First, the arrangement of the liquid crystals 310 in an "OFF" state of the thin film transistor will be described. Referring first to Figures 4-5 and 7, the liquid crystals 310 are aligned parallel to the alignment film 190 and 280 of the first and second panels 100 and 200, which may be rubbed at an angle in the range between 60 and 85 degrees with respect to the sub-electrode 182a. In this case, the long axes of the liquid crystals 310 are inclined at an angle α of approximately 60 to 85 degrees with respect to the sub-electrodes 182a.

Next, referring to Figures 4, 6A, 6B, and 7, with respect to the arrangement of the liquid crystals 310 in an "ON" state thin film transistor, when a thin film transistor is turned-on and an image signal is applied to the pixel electrode 182, an electric field E is generated between the first panel 100 and the second panel 200. At this time, a gray scale may be adjusted when the alignment direction is changed via a potential difference between the pixel electrodes 182 of the first panel 100 and the common electrodes 270 thereby adjusting the transmittance. An LCD according to an embodiment of the present disclosure, when using commercially used liquid crystals, has a high threshold voltage (Vₜₕ) in order to turn the thin film transistor on, and thus, may have a large potential difference with saturated transmittance. Therefore, when an LCD according to an embodiment of the present disclosure is driven in a general driving method using a commercial data drive IC, the potential difference with saturated transmittance may not be created. Accordingly, new liquid crystals should be used instead of using the commercially available liquid crystals, or data drive ICs that can output a wide range of data voltages should be used.

In the LCD according to the present embodiment, a relatively large potential difference is created by swinging a common voltage supplied to common electrodes 270 so that it is opposite to a data voltage supplied to the pixel electrode 180 even when commercial liquid crystals and a data driver IC are used. In displaying a gray scale using, for example, a data drive IC having an output voltage in the range of 0 to 15 V, if the potential difference between the pixel electrode 182 and the common electrode 270 is approximately 10 V, a fixed voltage of 7.5 V supplied to the common electrode 270 according to the general driving method yields a maximum potential difference of 7.5 V. Accordingly, the gray scale cannot be displayed. As illustrated in FIG. 6A, an LCD according to an embodiment of the present invention supplies a common voltage in the range of 5 to 10 V to the common electrode 270 in order to create a potential difference of 10 V using commercial liquid crystals and the data drive IC; more particularly, by supplying a data voltage (Vd) of 15 V to the pixel electrode 182 and a voltage of 5 V to the common electrode 270 or a data voltage (Vd) of 0 V to the pixel electrode 182 and a voltage of 10 V to the common electrode 270. That is, a larger potential difference can be created by swinging the common voltage (Vcom) to the data voltage (Vd) in an opposite polarity. Accordingly, a potential difference with enhanced transmittance can be created while using commercial liquid crystals or the data drive IC. This driving method is advantageous in that if the LCD according to the present embodiment is, for example, small or medium-sized, the RC delay is not greatly affected even though the common voltage swings.

In a LCD driven by the aforementioned method, the sub-electrodes 182a of the pixel electrode and the field-generating portions 270b interposed between the openings 270 of the common electrode 270 are alternately formed with the liquid crystal layer interposed therebetween, the electric field E is not vertically but horizontally directed in a curved shape from the sub-electrodes 182a to the field-generating portions 270b. The liquid crystals 310 having negative dielectric anisotropy are rotated in the direction of R₁ so that their long axes are aligned vertically with respect to the applied electric field E. That is, in the voltage-off state, the liquid crystals 310 are pre-tilted at a predetermined angle with respect to the sub-electrodes 182a by rubbing of the alignment films 190 and 280. In the voltage-on state, the liquid crystals 310 are uniformly rotated in a predetermined direction based on the pre-tilt angle. In this case, the liquid crystals 310 are rotated substantially parallel to the surfaces of the substrates 110 and 210.

As described above, the LCD according to the present embodiment has a low liquid crystal capacitance minimizing an area where the pixel electrode 182 meets the common electrode 270, and thus, is advantageous in a high frequency (e.g., 120 Hz) driving method such as an impulsive driving method. For example, when the time required for the liquid crystals 310 to be aligned in a field-generating direction, i.e., a rise time, is reduced, a response time can be improved by an overshoot driving method, such as dynamic capacitance compensation, of impulsive driving methods. In addition, when the time required for the liquid crystals 310 to return to their original alignment direction, i.e., the fall time, is reduced, the response time can be improved by applying an impulsive driving method such as backlight blinking.

Further, when a voltage is applied to the pixel electrode 182 in a state in which the liquid crystals 310 are pre-tilted at a predetermined angle with respect to the sub-electrodes 182a, the liquid crystals 310 are uniformly rotated in the same direction. Thus, the LCD of the illustrative embodiment is free from textures that are caused between liquid crystals rotating in different directions, thereby leading to no abnormal domains.

Then, a horizontal electric field is generated in an "ON" state thin film transistor, and thus, the liquid crystals 310 are rotated substantially parallel to the surfaces of the first and second insulation substrates 110 and 210, thereby realizing a viewing angle and visibility comparable to an in-plane switching (IPS) mode or a fringe-field switching (FFS) mode. In addition, all the liquid crystals 310 on the field-generating electrodes are rotated, i.e., the pixel electrode and the common electrode 270, thereby increasing transmittance.

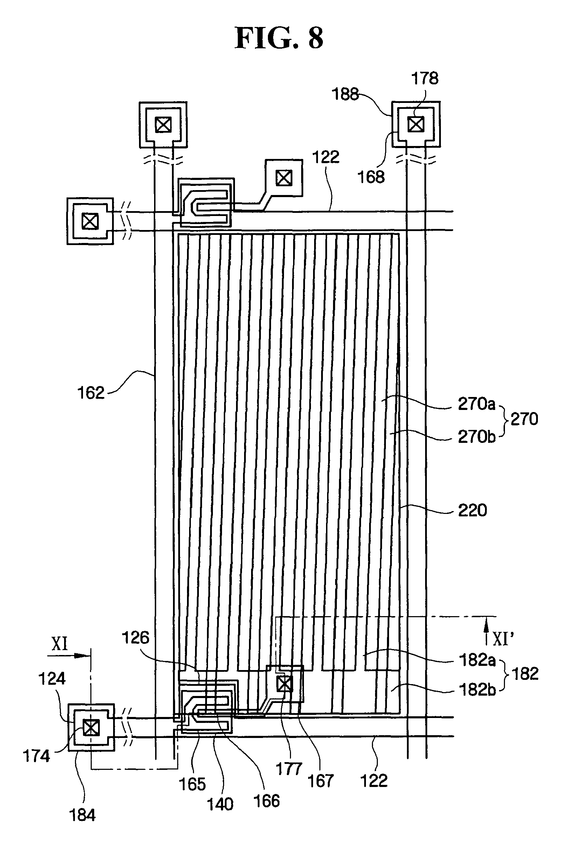

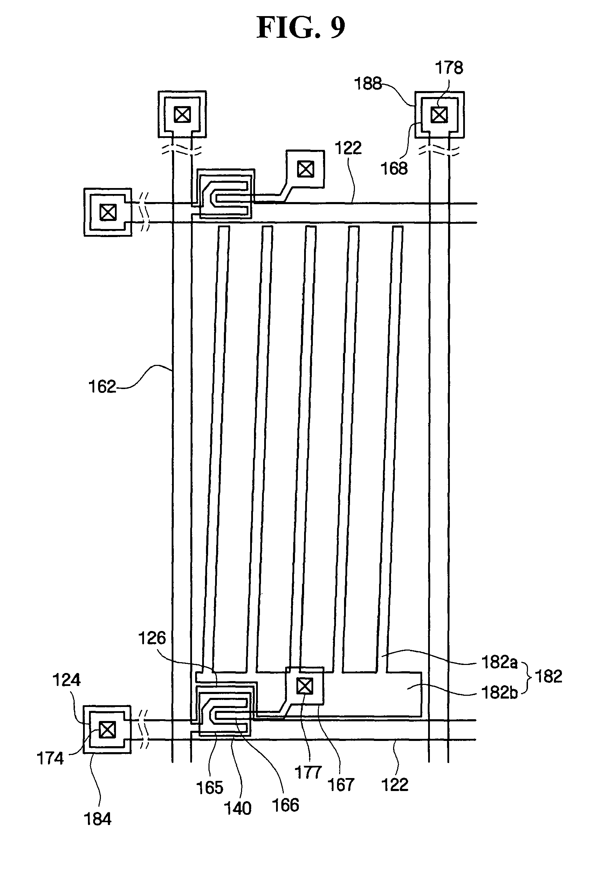

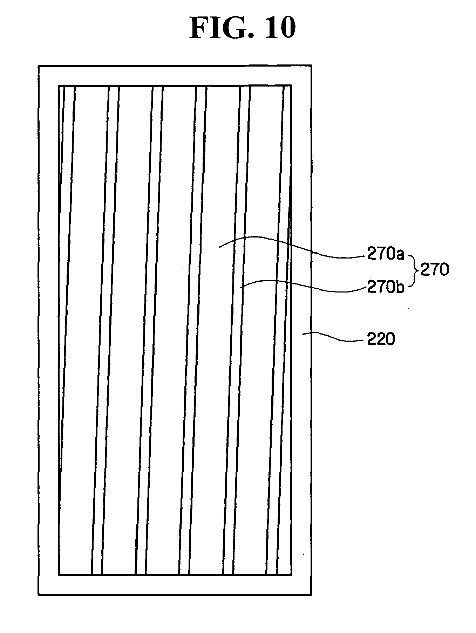

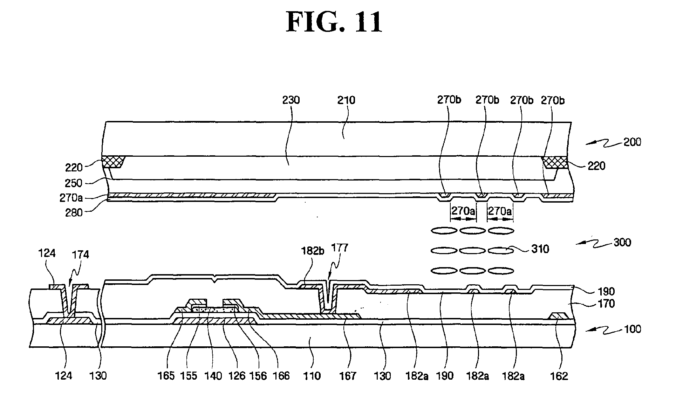

Next, a LCD according to a second embodiment of the present disclosure will be described with reference to Figures 8 through 11. Figure 8 illustrates a layout of a LCD according to second embodiment, Figure 9 illustrates a layout of a first panel of the LCD according to the second embodiment, Figure 10 illustrates a layout of a second panel of the LCD according to the second embodiment, and Figure 11 is a sectional view taken along a line XI-XI' of Figure 8.

The LCD of the second embodiment is the same as the LCD of the first embodiment except that an alignment film of a first panel and an alignment film of a second panel are rubbed at an angle of 90 degrees with respect to the longer side of a pixel area substantially extending in the direction of a data line 162, for example, under the condition that the rubbing direction of the alignment film of the first panel and the rubbing direction of the alignment film of the second panel form an angle of 180 degrees, and sub-electrodes 182a and openings 270a are formed parallel to each other in a state in which they are inclined at a predetermined angle, e.g., an angle from 60 to 85 degrees, with respect to the rubbing directions of the alignment films. Thus, descriptions thereof have been omitted to avoid repetition.

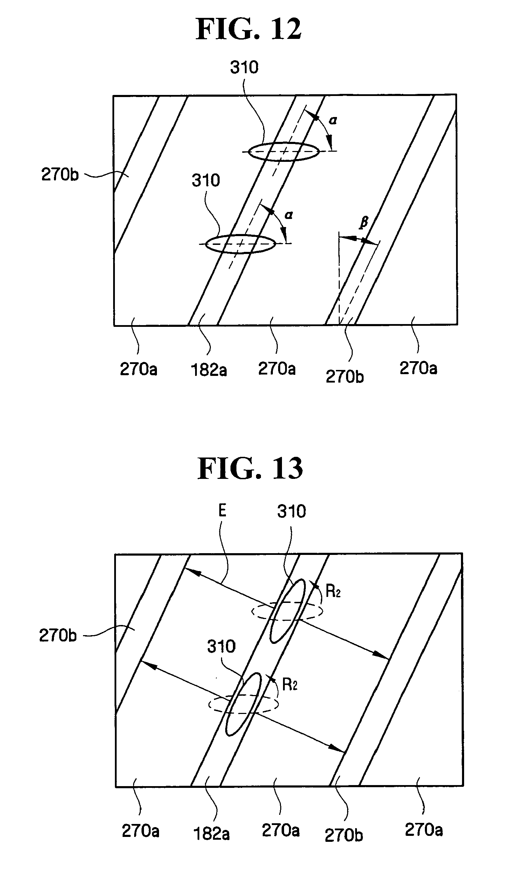

The arrangement of the liquid crystals in the on/off state of a thin film transistor of the LCD according to the illustrative embodiment will now be described with reference to Figures 11 through 13. Figure 12 is a schematic plan view illustrating the arrangement of liquid crystals when a thin film transistor of the LCD according to the second embodiment is in an "OFF" state, and Figure 13 is a schematic plan view illustrating the arrangement of liquid crystals when a thin film transistor of the LCD according to the second embodiment of the present disclosure is in an "ON" state.

Referring to Figures 11 and 12, first, with respect to the arrangement of the liquid crystals in an "OFF" state thin film transistor, the long axes of the liquid crystals 310 are aligned parallel to the alignment films 190 and 280 of the first and second panels 100 and 200, which may be rubbed at an angle in the range between 60 and 85 degrees with respect to the sub-electrode 182a, i.e., the long axes of the liquid crystals 310 are inclined at an angle of 90 degrees with respect to the longer side of the pixel area substantially extending in the direction of a data line 162, for example. In this case, the long axes of the liquid crystals 310 are inclined at an angle α approximately 60 to 85 degrees with respect to the sub-electrodes 182a, as illustrated in Figure 12.

Next, with respect to the liquid crystal molecule arrangement in an "ON" state thin film transistor, as shown in Figures 11 and 13, when the thin film transistor is turned-on and a data voltage is applied to the pixel electrode 182, an electric field E is generated between the first panel 100 and the second panel 200. Here, a method of driving the LCD is the same as the method according to the present embodiment, and the arrangement of the liquid crystals is the same as that of the previous embodiment, a horizontal electric field is generated as described above. Therefore, the liquid crystals 310 having negative dielectric anisotropy are rotated in a direction R₂ so that their long axes are aligned vertically with respect to an applied electric field due to the negative dielectric anisotropy. Here, the liquid crystals 310 adjacent to the alignment films 190 and 280 maintain their original alignments, which are uniformly rotated in the same direction based on a tilted angle created by rubbing of the alignment films 190 and 280.

As in the LCD according to the first embodiment, in the LCD of the second embodiment, an overlap area between the pixel electrode 182 and the common electrode 270 is minimized, thereby ensuring low liquid crystal capacitance.

In addition, the liquid crystals 310 are uniformly rotated in the same direction and abnormal domains are not generated without causing texture problems. Furthermore, a viewing angle and visibility similar to that of an IPS or FFS mode are obtained, and further, all the liquid crystals on field-generating electrodes are rotated, that is, the pixel electrode and the common electrode, thereby increasing transmittance.

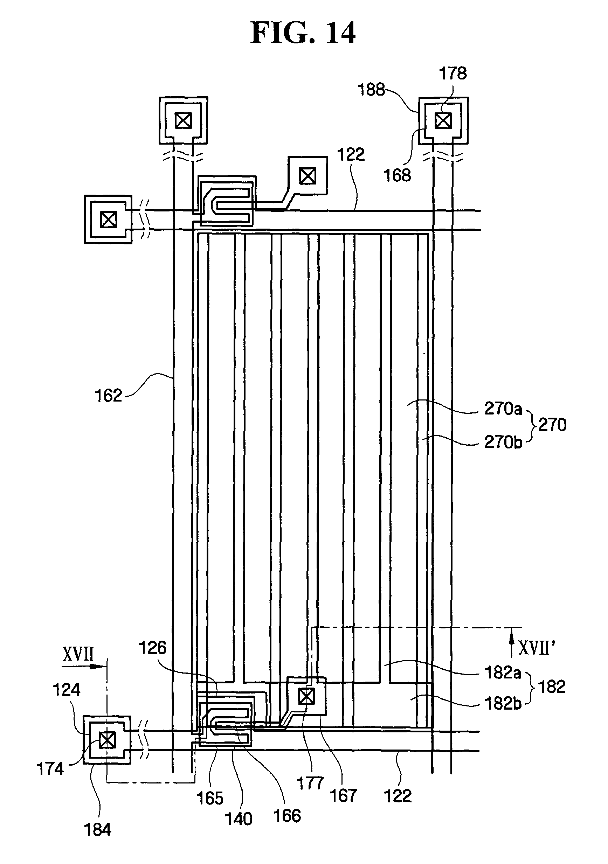

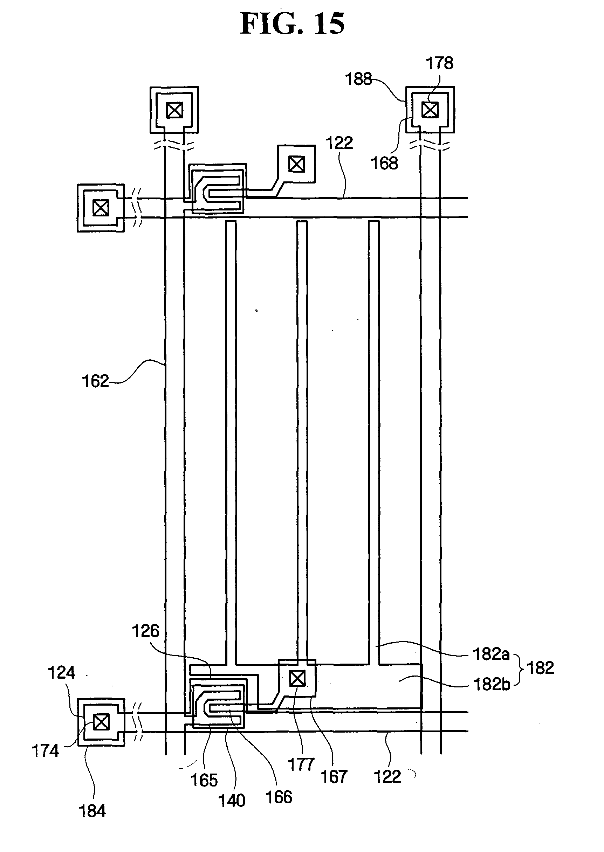

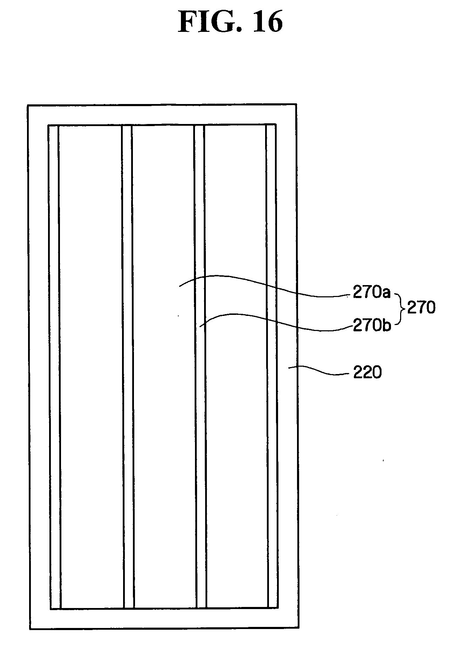

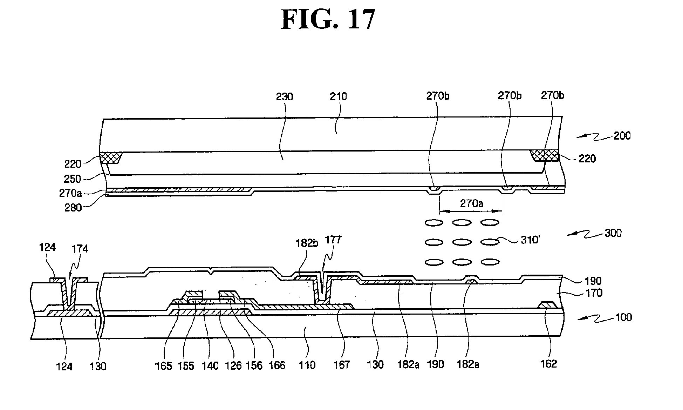

Hereinafter, a LCD according to a third embodiment will be described with reference to Figures 14 through 17. Figure 14 illustrates a layout of a LCD according to the third embodiment of the present disclosure, Figure 15 illustrates a layout of a first panel of the LCD according to the third embodiment of the present disclosure, Figure 16 illustrates a layout of a second panel 200 of the LCD according to the third embodiment, and Figure 17 is a sectional view taken along a line XVII-XVII' of Figure 14.

Since the first panel 100 of the LCD according to the third embodiment of the present disclosure is the same as that of LCD according to the second embodiment except for a pixel electrode 182 and an alignment film 190 formed thereon, a description thereof will not be given and only differences will be described.

Referring to Figures 14 through 17, a pixel electrode 182 including a plurality of sub-electrodes 182a and a connecting electrode 182b connecting the plurality of the sub-electrodes 182a is disposed on a passivation layer. The pixel electrode 182 includes the plurality of the sub-electrodes 182a and the connecting electrode 182b connecting sub-electrodes 182a. The sub-electrodes 182a of the pixel electrode 182 may have a predetermined shape, for example, stripes formed in parallel with longer sides of the pixel area substantially extending i the direction of a data line 162, for example. In this case, the width of each of the sub-electrodes 182a and a distance between the sub-electrodes 182a depend on optical properties of the LCD. For example, the width of each of the sub-electrodes 182a may be approximately 6 µm or less, and a distance between the sub-electrodes 182a may range from approximately 20 to 40 µm. If the width of each of the sub-electrodes 182a is 4 µm, the distance between the sub-electrodes 182a may be approximately 31 µm. The connecting electrode 182b of the pixel electrode 182 is formed to electrically connect the respective sub-electrodes 182a to each other. The connecting electrode 182b may be formed by connecting the respective sub-electrodes 182a to each other at either side or both sides of the sub-electrodes 182a or at the central portion of sub-electrodes 182a, and a connecting portion of the respective sub-electrodes 182a is not particularly limited.

An alignment film 190 is disposed on the first panel 100 having thereon the pixel electrode 182. The alignment film 190 of the first panel 100 allows the liquid crystals 310 of the liquid crystal layer to be horizontally aligned in a voltage-off state. The alignment film 190 allows the liquid crystals 310 to have a pre-tilt angle of, for example, 0.5 to 3 degrees. The alignment film 190 of the first panel 100 is rubbed so that the liquid crystals 310 of the liquid crystal layer are aligned at an angle a with respect to the sub-electrodes 182a in a voltage-off state. Here, the angle a may be determined by set optical properties of the LCD, and may be an arbitrary angle exempting 0 and 90 degrees. For example, the angle α may be an angle in the range between 5 and 30 degrees.

Since the second panel 200 of the LCD according to the third embodiment of the present disclosure is the same as that of the LCD according to the second embodiment except for a common electrode 270 and an alignment film 280 formed thereon, a description thereof will not be given and only differences will be described.

Referring to Figures 14, 16 and 17, the common electrode 270 including a plurality of openings 270a and a plurality of field-generating portions 270b is disposed on an overcoat layer 250. The openings 270a of the common electrode 270 are formed parallel to the sub-electrodes 182a of the pixel electrode 182 with a liquid crystal layer interposed therebetween. The widths of the openings 270a are equal to or greater than those of the sub-electrodes 182a so that the sub-electrodes 182a do not substantially overlap with the common electrode portions 270b. Here, the widths of the openings 270a are determined by set optical properties of the LCD and the widths of the sub-electrodes 182a. For example, the widths of the openings 270a may range from approximately 20 to 40 µm. For example, when the widths of the sub-electrodes 182a are 4 µm, the widths of the openings 270a may be 31 µm.

Electric fields are generated by the field-generating portions 270b interposed between the openings 270a of the common electrode 270, together with the sub-electrodes 182a of the first panel 100. The widths of the field-generating portions 270b interposed between the openings 270a are determined by set optical properties of the LCD and the widths of the sub-electrodes 182a and the openings 270a. For example, the widths of the common electrode portions 270b interposed between the openings 270a may be approximately 6 µm or less.

An alignment film 280 is disposed on a substrate 210 having thereon the common electrode 270. The alignment film 280 of the second panel 200 is an alignment film that allows the liquid crystals 310' of the liquid crystal layer to be horizontally aligned in a voltage-off state. For example, the alignment film 280 allows the liquid crystals 310' to have a pre-tilt angle of, for example, 0.5 to 3 degrees. In addition, the alignment film 280 of the second panel 200 is rubbed so that the liquid crystals 310 of the liquid crystal layer are aligned at an angle of α with respect to the openings 270b in a voltage-off state. Here, the angle α may be determined by set optical properties of the LCD, and may be an arbitrary angle exempting 0 and 90 degrees. For example, the angle α may be an angle in the range between 5 and 30 degrees. Here, the rubbing direction of the alignment film 280 of the second panel 200 forms an angle of about 180 degrees with respect to the rubbing direction of the alignment film 190 of the first insulation substrate 110.

As described above, the liquid crystals 310' constituting the liquid crystal layer according to the third embodiment have positive dielectric anisotropy (Δε > 0), i.e., the long axes of the liquid crystals 310' are aligned parallel to an applied electric field. Here, the liquid crystals 310' may preferably have dielectric anisotropy in the range of 7 to 15, and more preferably in the range of 9 to 12. The liquid crystals 310' are driven according to the on/off state of pixels in such a way that their long axes are substantially parallel to the surfaces of the substrates 110 and 210.

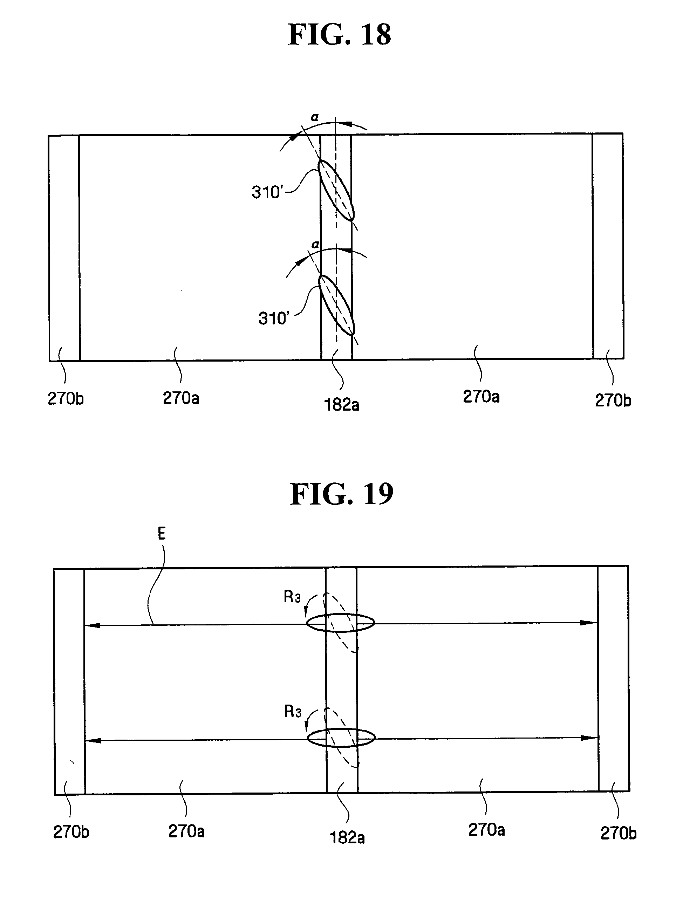

Next, the arrangement of the liquid crystals in the on/off-state of a thin film transistor of the LCD according to the third embodiment will now be described with reference to Figures 17 through 19. Figure 18 is a schematic plan view illustrating the arrangement of liquid crystals when a thin film transistor of the LCD according to the third embodiment is in an "OFF" state, and Figure 19 is a schematic plan view illustrating the arrangement of liquid crystals when a thin film transistor of the LCD according to the third embodiment is in an "ON" state.

First, referring to Figure 18, with respect to the arrangement of the liquid crystals 310' in an "OFF" state thin film transistor, the long axes of the liquid crystals 310 are aligned parallel to the alignment film 190 and 280 of the first and second panels 100 and 200, which may be rubbed at an angle in the range between 5 and 30 degrees with respect to the sub-electrode 182a. In this case, the long axes of the liquid crystals 310 are inclined at an angle α of approximately 60 to 85 degrees with respect to the sub-electrodes 182a.

Next, referring to Figures 17 and 19, with respect to the arrangement of the liquid crystals 310' in an "ON" state thin film transistor, when a thin film transistor is turned-on and a data voltage is applied to the pixel electrode 182, an electric field E is generated between the first panel 100 and the second panel 200. Here, a method of driving the LCD is the same as the method according to the embodiment of the present disclosure, and the electric field E is horizontally directed from the sub-electrodes 182a to the common electrode portions 270b as described in the LCD according to the first embodiment of the present disclosure. The liquid crystals 310' having positive dielectric anisotropy are rotated in the direction of R₃ so that their long axes are aligned parallel to the applied electric field E. At this time, the liquid crystals 310' are uniformly rotated in a predetermined direction based on the pre-tilt angle of the liquid crystals 310' pre-tilted with respect to the sub-electrodes 182a by rubbing of the alignment films 190 and 280. The rotation angle of the liquid crystals 310' having positive dielectric anisotropy is greater than liquid crystals having negative dielectric anisotropy. That is, the liquid crystals 310' having positive dielectric anisotropy have a greater radius than the liquid crystals having negative dielectric anisotropy. The liquid crystals 310' are rotated substantially parallel to the surfaces of the substrates 110 and 210.

In the LCD according to the third embodiment, the distances between the sub-electrodes of the pixel electrode and the widths of the openings 270a of the common electrode 270 are greater than those of the LCD according to the first embodiment. Thus, although the first and second panels 100 and 200 are misaligned creating a difference in interval between the sub-electrodes and the common electrode of the first panel, the electric field is not significantly distorted. Furthermore, in the present embodiment of the present invention, the use of the liquid crystals 310' having positive dielectric anisotropy increases a response speed and in-plane movement, thereby ensuring better visibility, as compared with liquid crystals having negative dielectric anisotropy. Moreover, like the LCD according to the first embodiment of the present disclosure, the LCD according to the third embodiment has reduced liquid crystal capacitance. In addition, no textures are caused since the liquid crystals 310' are uniformly rotated in the same direction in a voltage-on state, and a horizontal electric field is generated in an "ON" state thin film transistor. Therefore, a viewing angle and visibility similar to that of an IPS or FFS mode LCD are realized. In addition, all the liquid crystals 310' are rotated on the field-generating electrodes, thereby increasing transmittance. When the first and second plates are misaligned, an available voltage supplied to the liquid crystals in an area where the interval between the sub-electrodes and the common electrode has increased may decrease. Accordingly, the available voltage supplied to the liquid crystals decreases, thereby decreasing the transmittance.

The amount of the available voltage supplied to the liquid crystals depends on the dielectric anisotropy. That is, the available voltage supplied to the liquid crystals relatively increases as the dielectric anisotropy increases. Accordingly, the decline in transmittance contributing to misalignment may be reduced by using liquid crystals having a relatively large dielectric anisotropy.

For example, the use of liquid crystals having a dielectric anisotropy of 7 or more is efficient in reducing the decline in transmittance. In regards to the stability of liquid crystals with respect to heat or ultraviolet rays, liquid crystals having a dielectric anisotropy of 15 or less may be exemplified. Preferably, the decline in transmittance can be efficiently reduced and the stability of the liquid crystals can be achieved using the liquid crystals having a dielectric anisotropy in the range of 9 to 13.

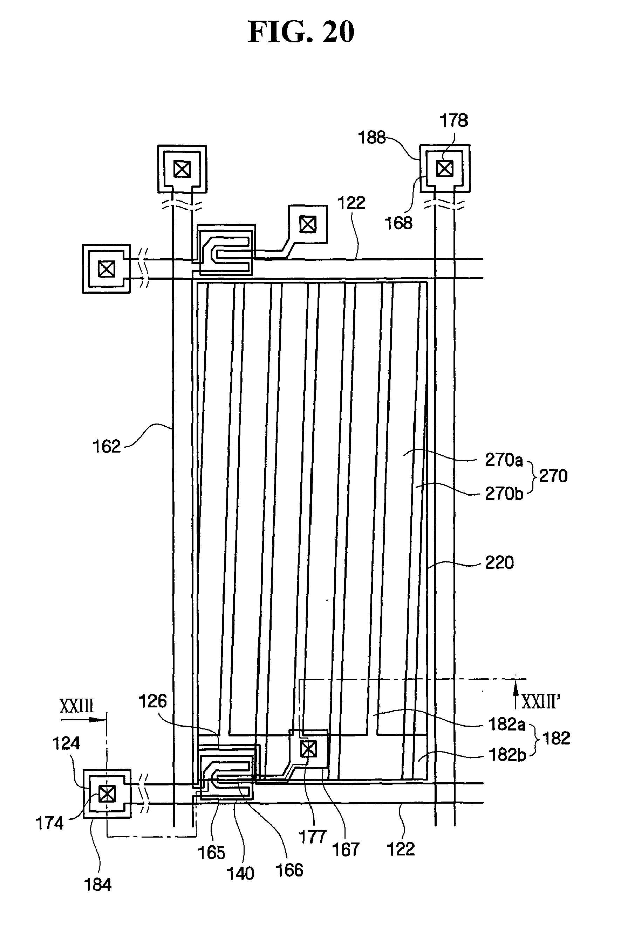

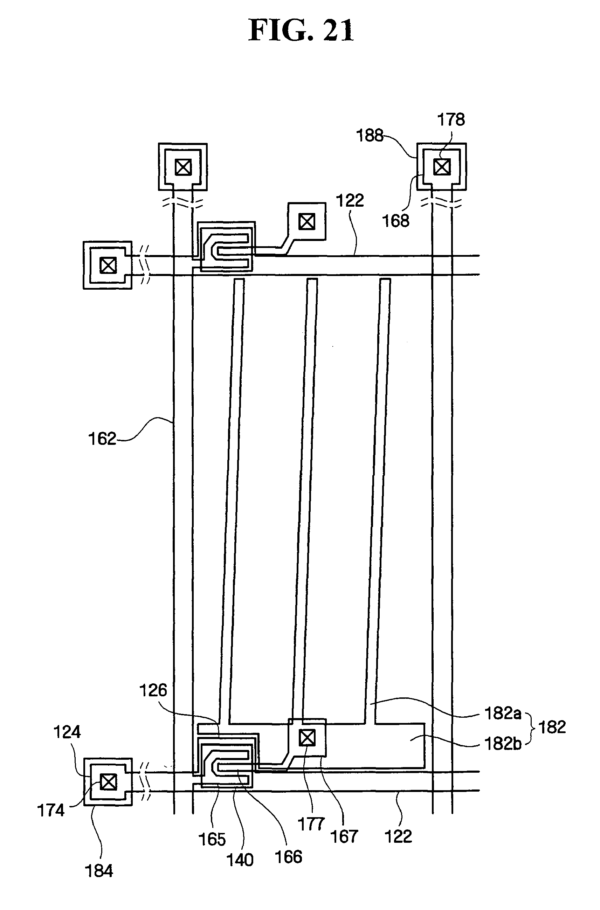

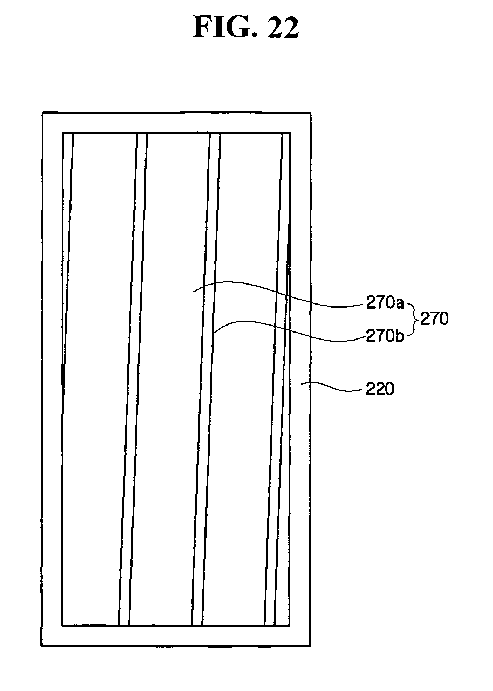

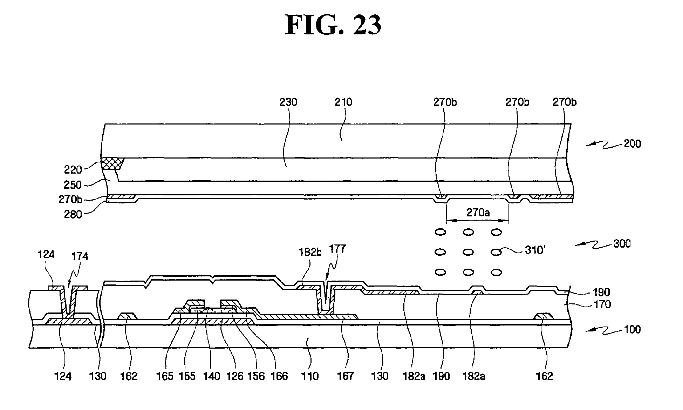

Next, an LCD according to a fourth embodiment will be described with reference to Figures 20 through 23. Figure 20 illustrates a layout of a LCD according to the fourth embodiment, Figure 21 illustrates a layout of a first panel of the LCD according to the fourth embodiment, Figure 22 illustrates a layout of a second panel of the LCD according to the fourth embodiment, and Figure 23 is a sectional view taken along a line XXIII-XXIII' of Figure 20.

The LCD according to the fourth embodiment is substantially similar to the LCD according to the third embodiment including the sub-electrodes 182a and the openings 270a parallel to the longer side of the pixel area and the liquid crystals 310' having positive dielectric anisotropy, except that an alignment film 190 of a first panel 100 and an alignment film 280 of a second panel 200 are rubbed parallel to the longer side of a pixel area substantially extending in the direction of a data line 162, for example, under the condition that the rubbing directions of the alignment films 190 and 280 of the first and second panels 100 and 200 form an angle of about 180 degrees, and sub-electrodes 182a and openings 270a are formed parallel to each other at a predetermined angle of, e.g., 5 to 30 degrees with respect to the rubbing directions of the alignment films 190 and 280. Accordingly, to avoid repetition, a description thereof will not be given.

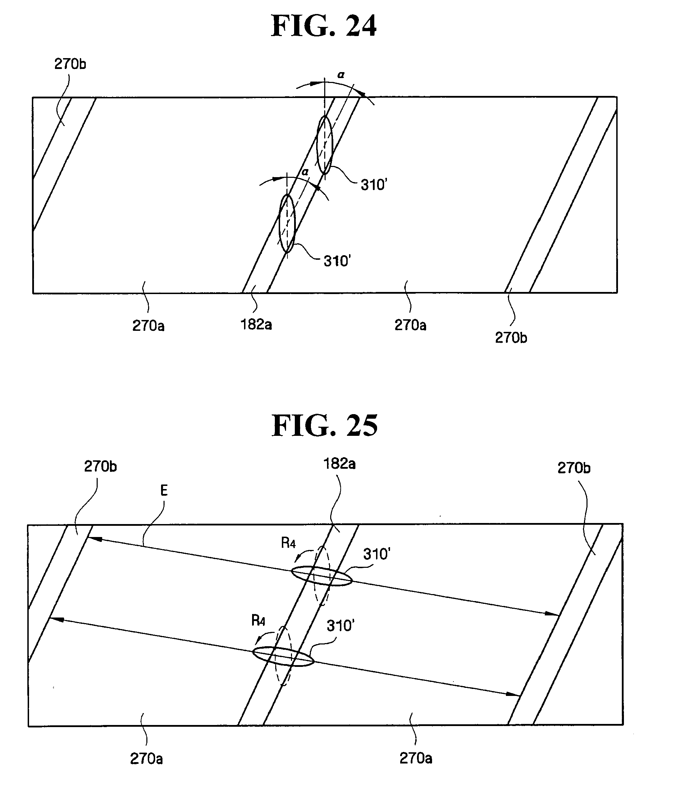

Next, the arrangement of the liquid crystals in the an on/off state of a thin film transistor of the LCD according to the fourth embodiment will now be described with reference to Figures 23 through 25. Figure 24 is a schematic plan view illustrating the arrangement of liquid crystals when a thin film transistor of the LCD according to the fourth embodiments in an "OFF" state, and Figure 25 is a schematic plan view illustrating the arrangement of liquid crystals when a thin film transistor of the LCD according to the fourth embodiment is in an "ON" state.

First, referring to Figures 23 and 24, with respect to the arrangement of the liquid crystals in an "OFF" state thin film transistor, the sub-electrodes 182a and the openings 270a are inclined at a predetermined angle of, e.g., 5 to 30 degrees with respect to the rubbing directions of the alignment films 190 and 280 rubbed in opposite directions and parallel to the longer side of the pixel area substantially extending in the direction of a data line 162, for example. The liquid crystals 310' are aligned parallel to the rubbing directions of the horizontal alignment films 190 and 280 so that their long axes are inclined at a pre-tilt angle of 0.5 to 3 degrees with respect to the surfaces of the substrates 110 and 210. That is, the long axes of the liquid crystals 310' are aligned parallel to the longer side of the pixel area. As a result, the long axes of the liquid crystals 310' are aligned at an angle α of approximately 5 to 30 degrees with respect to the sub-electrodes 182a.

Next, referring to Figure 25, with respect to the arrangement of the liquid crystals 310' in an "ON" state thin film transistor, when a thin film transistor is turned-on and a data voltage is applied to the pixel electrode 182, an electric field E is generated between the first panel 100 and the second panel 200. Here, a method of driving the LCD is the same as the method according to the present embodiment, and the electric field E is entirely generated as described in the description of the first embodiment. The liquid crystals 310' having positive dielectric anisotropy are rotated in the direction of R₄ so that their long axes are aligned parallel to the applied electric field E. Here, the liquid crystals 310' are uniformly rotated in a predetermined direction based on the pre-tilt angle of the liquid crystals 310' pre-tilted with respect to the sub-electrodes 182a by rubbing of the alignment films 190 and 280. The rotation angle of the liquid crystals 310' having a positive dielectric anisotropy is greater than liquid crystals having a negative dielectric anisotropy. That is, the liquid crystals 310' having the positive dielectric anisotropy have a greater radius than the liquid crystals having the negative dielectric anisotropy. In addition, the liquid crystals 310' are rotated substantially parallel to the surfaces of the substrates 110 and 210.

As described above, in the LCD according to the fourth embodiment, although the first panel 100 and the second panel 200 are misaligned, electric field distortion is not caused, as was also the case in the LCD including the sub-electrodes 182a and the openings 270a parallel to the longer side of a pixel area and the liquid crystals 310' having positive dielectric anisotropy according to the third embodiment.

In addition, the use of the liquid crystals 310' having positive dielectric anisotropy increases the response speed and in-plane movement, thereby ensuring better visibility, as compared with liquid crystals having negative dielectric anisotropy. In addition, like the LCD according to the first embodiment, liquid crystal capacitance decreases, and no textures are caused since the liquid crystals 310' are uniformly rotated in the same direction in a voltage-on state.

Further, a horizontal electric field is generated in an "ON" state thin film transistor, thereby realizing a viewing angle and visibility comparable to the IPS mode or FFS mode LCDs. In addition, all the liquid crystals 310' on the field-generating electrodes are rotated, thereby increasing transmittance.

In addition, for the liquid crystals having a positive dielectric anisotropy in the range of 7 to 15, preferably 9 to 12, the decline in transmittance may be efficiently reduced while maintaining stability.

Hereinafter, the present disclosure will be described more specifically with reference to Experimental Examples and Comparative Examples. The following Examples are for illustrative purposes and are not intended to limit the scope of the invention.

Experimental Examples 1 - 24 and Comparative Examples 1 - 20 are described below. These examples provide a comparison of transmittance according to the configuration of an LCD.

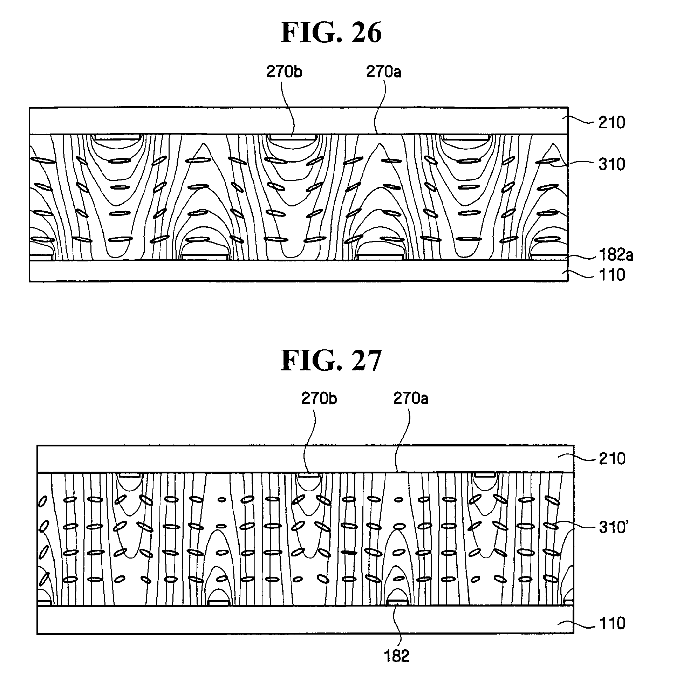

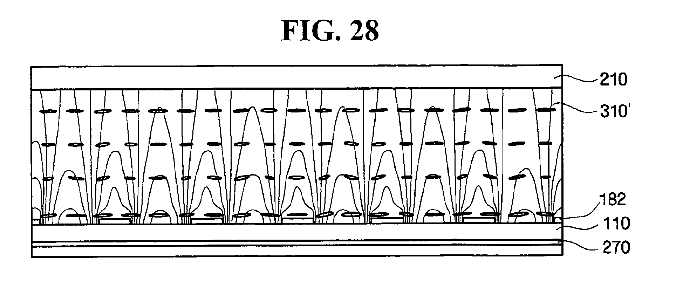

First, the characteristics of LCDs according to embodiments of the present disclosure and conventional FFS mode LCDs were evaluated through computer simulation, and the transmittances of the LCDs obtained through the simulation are presented in Table 1 below. In Table 1, LCD samples according to embodiments of the present disclosure were used in Experimental Examples 1-24 and FFS mode LCD samples were used in Comparative Examples 1-20. In Table 1, *w* is a width of each sub-electrode of a pixel electrode or the distance between openings of a common electrode (for Experimental Examples 1-24) or a width of a pixel electrode (for Comparative Examples 1-20), *L* is the distance between sub-electrodes of a pixel electrode or a width of each opening of a common electrode (for Experimental Examples 1-24) or the distance between pixel electrodes (for Comparative Examples 1-20), *D* is a cell gap, Δ*n* is birefringence, Δε is dielectric anisotropy, and *φ* is the angle between sub-electrodes of a pixel electrode and a rubbing direction. The equipotential lines formed in the "ON" state of thin film transistors of the LCDs of Experimental Examples 9 and 22, and Comparative Example 9 are diagrammatically illustrated in Figures 26 through 28, respectively. Figure 26 illustrates the equipotential lines formed between stripe-shaped sub-electrodes 182a formed on a first insulation substrate 110 of a first panel 100 and common electrode portions 270b formed on a second insulation substrate 210 of a second panel 200 and the arrangement of liquid crystals 310 having negative dielectric anisotropy in a LCD according to an embodiment. Figure 27 illustrates the equipotential lines formed between stripe-shaped sub-electrodes 182a formed on a first substrate 110 of a first panel 100 and common electrode portions 270b formed on a second substrate 210 of a second panel 200 and the arrangement of liquid crystals 310' having positive dielectric anisotropy in a LCD according to the second embodiment of the present disclosure. Figure 28 illustrates the equipotential lines formed between a common electrode 270 and a stripe-shaped pixel electrode 182 formed on a substrate 110 of a first panel 100 and the arrangement of liquid crystals 310' having positive dielectric anisotropy in an FFS mode LCD.

**TABLE 1**

| Examples | w | L | D | Δn | Δε | Φ | Transmittance (%) |
|---|---|---|---|---|---|---|---|
| Experimental Example 1 | 4 | 9 | 4.2 | 0.0800 | -3.8 | 80 | 44.17 |
| Experimental Example 2 | 4 | 9 | 4.4 | 0.0800 | -3.8 | 80 | 44.85 |
| Experimental Example 3 | 4 | 9 | 4.6 | 0.0800 | -3.8 | 80 | 44.80 |
| Experimental Example 4 | 4 | 9 | 5.0 | 0.0800 | -3.8 | 80 | 43.22 |
| Experimental Example 5 | 4 | 10 | 4.2 | 0.0800 | -3.8 | 80 | 44.56 |
| Experimental Example 6 | 4 | 10 | 4.6 | 0.0800 | -3.8 | 80 | 45.64 |
| Experimental Example 7 | 4 | 10 | 5.0 | 0.0800 | -3.8 | 80 | 44.54 |
| Experimental Example 8 | 4 | 11 | 4.2 | 0.0800 | -3.8 | 80 | 44.29 |
| Experimental Example 9 | 4 | 11 | 4.6 | 0.0800 | -3.8 | 80 | 45.69 |
| Experimental Example 10 | 4 | 11 | 5.0 | 0.0800 | -3.8 | 80 | 44.98 |
| Experimental Example 11 | 4 | 12 | 4.2 | 0.0800 | -3.8 | 80 | 43.95 |
| Experimental Example 12 | 4 | 12 | 4.6 | 0.0800 | -3.8 | 80 | 45.34 |
| Experimental Example 13 | 4 | 12 | 5.0 | 0.0800 | -3.8 | 80 | 44.78 |
| Experimental Example 14 | 5 | 10 | 4.6 | 0.0800 | -3.8 | 80 | 43.57 |
| Experimental Example 15 | 5 | 10 | 5.0 | 0.0800 | -3.8 | 80 | 42.98 |
| Experimental Example 16 | 5 | 11 | 4.6 | 0.0800 | -3.8 | 80 | 43.74 |
| Experimental Example 17 | 5 | 11 | 5.0 | 0.0800 | -3.8 | 80 | 43.45 |
| Experimental Example 18 | 5 | 12 | 4.6 | 0.0800 | -3.8 | 80 | 43.44 |
| Experimental Example 19 | 5 | 12 | 5.0 | 0.0800 | -3.8 | 80 | 43.38 |
| Experimental Example 20 | 4 | 31 | 4.6 | 0.0783 | 6 | 10 | 43.15 |
| Experimental Example 21 | 4 | 31 | 5.0 | 0.0720 | 6 | 10 | 44.15 |
| Experimental Example 22 | 4 | 31 | 5.2 | 0.0692 | 6 | 10 | 44.16 |
| Experimental Example 23 | 4 | 31 | 5.4 | 0.0667 | 6 | 10 | 44.04 |
| Experimental Example 24 | 4 | 31 | 6.0 | 0.0600 | 6 | 10 | 43.43 |
| Comparative Example 1 | 4 | 6 | 3.8 | 0.0920 | -3.8 | - | 43.34 |
| Comparative Example 2 | 4 | 7 | 3.8 | 0.0920 | -3.8 | - | 43.86 |
| Comparative Example 3 | 4 | 8 | 3.8 | 0.0920 | -3.8 | - | 43.34 |
| Comparative Example 4 | 5 | 6 | 3.8 | 0.0920 | -3.8 | - | 40.92 |
| Comparative Example 5 | 5 | 7 | 3.8 | 0.0920 | -3.8 | - | 41.85 |
| Comparative Example 6 | 5 | 8 | 3.8 | 0.0920 | -3.8 | - | 41.83 |
| Comparative Example 7 | 4 | 5 | 4.2 | 0.0920 | -3.8 | - | 41.89 |
| Comparative Example 8 | 4 | 6 | 4.2 | 0.0920 | -3.8 | - | 44.66 |
| Comparative Example 9 | 4 | 7 | 4.2 | 0.0920 | -3.8 | - | 44.98 |
| Comparative Example 10 | 4 | 8 | 4.2 | 0.0920 | -3.8 | - | 44.29 |
| Comparative Example 11 | 5 | 6 | 4.2 | 0.0920 | -3.8 | - | 42.09 |
| Comparative Example 12 | 5 | 7 | 4.2 | 0.0920 | -3.8 | - | 43.36 |
| Comparative Example 13 | 5 | 8 | 4.2 | 0.0920 | -3.8 | - | 43.08 |
| Comparative Example 14 | 4 | 5 | 4.6 | 0.0920 | -3.8 | - | 40.93 |
| Comparative Example 15 | 4 | 6 | 4.6 | 0.0920 | -3.8 | - | 43.54 |
| Comparative Example 16 | 4 | 7 | 4.6 | 0.0920 | -3.8 | - | 43.89 |
| Comparative Example 17 | 4 | 8 | 4.6 | 0.0920 | -3.8 | - | 43.12 |
| Comparative Example 18 | 5 | 6 | 4.6 | 0.0920 | -3.8 | - | 41.54 |
| Comparative Example 19 | 5 | 7 | 4.6 | 0.0920 | -3.8 | - | 42.58 |
| Comparative Example 20 | 5 | 8 | 4.6 | 0.0920 | -3.8 | - | 42.17 |

As shown in Table 1 and Figures 26 through 28, when comparing the simulation results between the LCDs according to Experimental Examples 1-24 of the present disclosure and the FFS mode LCDs according to Comparative Examples 1-20, the transmittances of the LCDs according to Experimental Examples 1-24 were similar to or greater than those of the LCDs according to Comparative Examples 1-20.

Experimental Examples 25 - 31 are descried below. These examples provide an evaluation of the decline in transmittance according to the dielectric anisotropy of an LCD.

A simulation was carried out on an LCD having the same configuration as the embodiments of the present invention, an L of 27 µm and a φ of 20 degrees. The transmittance obtained therefrom is displayed in Table 2. The transmittance when the first and second plates are aligned and misaligned by 6 µm is simulated. Here, Δε denotes dielectric anisotropy, and the decline in transmittance is a ratio of the transmittance when the second plate is misaligned by 6 µm to the transmittance when the second plate is aligned.

**TABLE 2**

| | Δε | Transmittance (%) | | Decline in Transmittance (%) |
|---|---|---|---|---|
| | | Aligned | Misaligned by 6 µm | |
| Experimental Example 1 | 7.4 | 41.51 | 30.24 | 27.15 |
| Experimental Example 2 | 8.4 | 41.14 | 32.34 | 21.39 |
| Experimental Example 3 | 10 | 39.65 | 34.47 | 13.06 |
| Experimental Example 4 | 11 | 39.09 | 35.20 | 9.95 |
| Experimental Example 5 | 12 | 38.71 | 35.81 | 7.49 |
| Experimental Example 6 | 13 | 38.40 | 36.24 | 5.63 |
| Experimental Example 7 | 14 | 38.13 | 36.20 | 5.06 |

Referring to Table 2, as dielectric anisotropy of liquid crystals increases, the transmittance, when the plates are aligned, slightly decreases. For example, the difference between the dielectric anisotropy of 7.4 and 14 is 3.38 %, and thus is minor. Conversely, when the plates are misaligned by 6 µm, the transmittance increases as the dielectric anisotropy increases. Accordingly, the decline in transmittance significantly decreases as the dielectric anisotropy increases. The experiments show that the decline in transmittance can be efficiently reduced by using large liquid crystals even if the plates are misaligned.

In conclusion, those of ordinary skill in the pertinent art will appreciate that many variations and modifications can be made to the preferred embodiments without departing from the principles of the present invention. Therefore, the disclosed preferred embodiments of the invention are used in a generic and descriptive sense only and not for purposes of limitation.

As described above, a liquid crystal display according to the present disclosure minimizes an overlap area between field-generating electrodes and has a structure capable of generating a horizontal electric field and including liquid crystals having positive or negative dielectric anisotropy, thereby realizing better visibility and transmittance.

## Claims

1. A liquid crystal display comprising:
a first panel including a first field-generating electrode disposed in a pixel area of a first insulation substrate and a first alignment film covering the first field-generating electrode and being rubbed in a first direction, the first field-generating electrode having a plurality of sub-electrodes being parallel to and separated from each other by a predetermined distance and a connecting electrode electrically connecting the sub-electrodes;
a second panel including a second field-generating electrode disposed on a second insulation substrate and a second alignment film covering the second field-generating electrode and being rubbed in a second direction, the second field-generating electrode having a plurality of openings facing the sub-electrodes and widths greater than widths of the sub-electrodes; and
a liquid crystal layer interposed between the first and second panels.

2. The liquid crystal display of claim 1, wherein the width of the sub-electrodes in the first field-generating electrode is about 6 µm or less.

3. The liquid crystal display of claim 1, wherein a distance between the openings in the second field-generating electrode is about 6 µm or less.

4. The liquid crystal display of claim 1, wherein the first and second alignment films are horizontal-alignment films.

5. The liquid crystal display of claim 1, wherein the first direction and the second direction form an angle of about 180 degrees.

6. The liquid crystal display of claim 1, wherein a pre-tilt angle of liquid crystals constituting the liquid crystal layer is in a range between about 0.5 and about 3 degrees.

7. The liquid crystal display of claim 1, wherein liquid crystals constituting the liquid crystal layer have negative dielectric anisotropy.

8. The liquid crystal display of claim 7, wherein a distance between the sub-electrodes in the first field-generating electrode is in a range between about 4 and about 14 µm.

9. The liquid crystal display of claim 7, wherein the width of the openings in the second field-generating electrode is in a range between about 4 and about 14 µm.

10. The liquid crystal display of claim 7, wherein the sub-electrodes and the first direction form an angle of about 60 to about 85 degrees.

11. The liquid crystal display of claim 1, wherein liquid crystals constituting the liquid crystal layer have positive dielectric anisotropy.

12. The liquid crystal display of claim 11, wherein the dielectric anisotropy of the liquid crystals is in the range of about 7 to about 15.

13. The liquid crystal display of claim 11, wherein a distance between the sub-electrodes in the first field-generating electrode is in a range between about 20 and about 40 µm.

14. The liquid crystal display of claim 11, wherein the width of the openings in the second field-generating electrode is in a range between about 20 and about 40 µm.

15. The liquid crystal display of claim 11, wherein the sub-electrodes and the first direction form an angle of about 5 to about 30 degrees.

16. The liquid crystal display of claim 1, wherein a common voltage supplied to the second field-generating electrode swings to be opposite to a data voltage supplied to the first field-generating electrode.

17. A liquid crystal display comprising:
a first panel including a first field-generating electrode disposed in a pixel area of a first insulation substrate and a first horizontal-alignment film covering the first field-generating electrode and being rubbed in a first direction, the first field-generating electrode having a plurality of sub-electrodes being parallel to and separated from each other by a predetermined distance and a connecting electrode electrically connecting the sub-electrodes;
a second panel including a second field-generating electrode disposed on a second insulation substrate and a second horizontal-alignment film covering the second field-generating electrode and being rubbed in a second direction, the second field-generating electrode having a plurality of openings facing the sub-electrodes and widths greater than widths of the sub-electrodes; and
a liquid crystal layer, including liquid crystals having negative dielectric anisotropy, interposed between the first panel and the second panel.

18. The liquid crystal display of claim 17, wherein the width of the sub-electrodes and a distance between the openings are about 6 µm or less.

19. The liquid crystal display of claim 17, wherein the width of the sub-electrodes and a distance between the openings are in a range between about 4 and about 14 µm.

20. The liquid crystal display of claim 17, wherein the first direction and the second direction form an angle of about 180 degrees.

21. The liquid crystal display of claim 20, wherein the sub-electrodes and the first direction form an angle of about 60 to about 85 degrees.

22. The liquid crystal display of claim 17, wherein a common voltage supplied to the second field-generating electrode swings to be opposite to a data voltage supplied to the first field-generating electrode.

23. A liquid crystal display comprising:
a first panel including a first field-generating electrode, disposed in a pixel area of a first insulation substrate and a first horizontal-alignment film covering the first field-generating electrode and being rubbed in a first direction, the first field-generating electrode having a plurality of sub-electrodes being parallel to and separated from each other by a predetermined distance and a connecting electrode electrically connecting the sub-electrodes;
a second panel including a second field-generating electrode disposed on a second insulation substrate and a second horizontal-alignment film covering the second field-generating electrode and being rubbed in a direction 180 degrees from the first direction, the second field-generating electrode having a plurality of openings facing the sub-electrodes and widths greater than widths of the sub-electrodes; and
a liquid crystal layer, including liquid crystals having positive dielectric anisotropy, interposed between the first panel and the second panel.

24. The liquid crystal display of claim 23, wherein the anisotropic dielectric permittivity is in a range of about 7 to about 15.

25. The liquid crystal display of claim 23, wherein the width of the sub-electrodes and a distance between the openings are about 6 µm or less.

26. The liquid crystal display of claim 23, wherein a distance between the sub-electrodes and the width of the openings are in a range between about 20 and about 40 µm.

27. The liquid crystal display of claim 23, wherein the first direction and the second direction form an angle of about 180 degrees.

28. The liquid crystal display of claim 27, wherein the sub-electrodes and the first direction form an angle in a range of about 5 to about 30 degrees.

29. The liquid crystal display of claim 23, wherein a common voltage supplied to the second field-generating electrode swings to be opposite to a data voltage supplied to the first field-generating electrode.
